# EUROPEAN PATENT APPLICATION

(11) **EP 1 122 223 A1**
(43) Date of publication of application: **08.08.2001**
(21) Application number: 00870014.8
(22) Date of filing: 01.02.2000
(51) Int. Cl.: C04B 28/02, C04B 18/16

(54) **Cement composition for construction purposes, in particular for floor coverings**

(71) Applicant: Lieber, Roger, 4960 Malmedy (BE)
(72) Inventor: Lieber, Roger, 4960 Malmedy (BE)
(74) Representative: Van Malderen, Michel

(57) **Abrégé**

Composition pour la production d'éléments de construction utilisables dans l'industrie du bâtiment présentant des propriétés d'isolation thermique et/ou phonique caractérisée en ce qu'elle est constituée essentiellement d'un liant hydraulique tel que du ciment et de poudre de béton cellulaire et de matière isolante, pouvant être mise en oeuvre par gâchage avec de l'eau.

## Description

### Objet de l'invention

La présente invention concerne une composition à fonction isolante thermique et/phonique convenant en particulier à la réalisation de chapes pour des planchers dans la construction et plus précisément dans l'industrie du bâtiment.

### Arrière-plan technologique et état de la technique

Dans la construction, il est classique de recouvrir les dalles formant planchers, généralement réalisées en béton armé, d'une chape constituée d'une ou plusieurs couches superficielles destinées à réaliser une égalisation du plancher avant la pose de la finition décorative sous forme de carrelages, de dalles ou de revêtements de sols, formés de lés en matière décoratives synthétiques (PVC et autres) ou semi-synthétique (linoléum).

En plus de sa fonction d'égalisation, on cherche à conférer à la chape des propriétés d'isolation thermique et, dans de nombreux cas, d'isolation phonique.

Les compositions utilisées à cet effet doivent répondre à un grand nombre de critères, tant au niveau de la résistance mécanique qu'au niveau de la stabilité dimensionnelle, notamment pour ce qui concerne la dilatation thermique et l'absence de friabilité.

Elles doivent pouvoir être facilement lissables et de préférence être auto-lissables et être faciles à poser.

L'utilisation de liège granulé ainsi que de produits expansés du type polystyrène ou argile expansé ont déjà été proposés pour conférer les propriétés isolantes nécessaires aux compositions destinées à la construction. Dans les documents FR 2,681,856, FR-2 727 675, GB-826 582 et GB 942 718, on propose pour différents usages liés à la construction, l'utilisation de telles matières, généralement en les incorporant dans des compositions à base de ciment et de sable ou de plâtre. Ces compositions sont gâchées avec de l'eau pour leur mise en oeuvre.

Dans le cas du plâtre, cette matière ne convient pas pour la réalisation de chapes, à cause de ses propriétés mécaniques insuffisantes.

Le ciment en mélange avec du sable et éventuellement des agrégats présente l'inconvénient d'accepter difficilement l'incorporation d'isolant, à cause de phénomènes de ségrégation entraînant une difficulté à réaliser un mélange homogène. L'utilisation de sable avec le ciment est peu favorable à l'isolation, ce qui amène à accroître la teneur en substance isolante du type des matières précitées, en rendant de ce fait encore plus difficile la maîtrise des phénomènes de ségrégation.

### Buts visés par l'invention

La présente invention vise à résoudre les difficultés précitées.

Elle vise en particulier à proposer une composition répondant aux critères de résistance mécanique et de stabilité, qui soit facile à mettre en oeuvre et qui présente de bonnes propriétés globales d'isolation, tout en permettant l'incorporation de substances permettant d'améliorer l'isolation. La plupart des ces substances sont bien connues des spécialistes.

A titre complémentaire, l'invention vise à réaliser des compositions qui, à propriétés égales, présentent une masse spécifique inférieure aux solutions proposées dans l'état de la technique.

L'invention à titre subsidiaire vise à fournir une composition qui permet de produire des dalles préfabriquées servant à réaliser une chape sèche.
Sur une telle chape, on peut très rapidement, par exemple le lendemain, poser un revêtement de nature généralement quelconque.

### Eléments caractéristiques de l'invention

L'invention porte sur une composition pour la production d'éléments de construction utilisables dans l'industrie du bâtiment présentant des propriétés d'isolation thermique et/ou phonique caractérisée en ce qu'elle est constituée essentiellement d'un liant hydraulique tel que du ciment et de poudre de béton cellulaire et de matière isolante, pouvant être mise en oeuvre par gâchage avec de l'eau.

La composition est en particulier caractérisée en ce qu'elle comporte, en volume, les constituants suivants :
- ciment : 20 à 50%, de préférence 30 à 40% ;
- poudre de béton cellulaire : 5 à 60%, de préférence 10 à 40% ;
- bille de matière expansée ou granulat de liège : solde pour 100 %

En particulier, lorsqu'on vise à obtenir simultanément une bonne isolation thermique et une bonne isolation phonique, il est recommandé d'utiliser ensemble des billes de matière expansée et des granulats de liège, et ceci dans un rapport volumétrique compris entre 10 à 90 pour les billes de matière expansée et entre 9 à 10 pour les granulats de liège.

Il s'est avéré utile d'incorporer à de tels mélanges de base (pour 100 parties en volume) des adjuvants de renforcement d'ouvrabilité du type méthylhydroxyethyl-cellulose à raison de 0,01 à 5 volumes, de préférence de 0,1 à 1 volume.

Afin de renforcer les propriétés mécaniques et la stabilité dimensionnelle, l'adjonction aux mélanges précités des fibres synthétiques à raison de 1 à 10 volumes et de préférence, de 1,5 à 5 volumes (pour 100 volumes du mélange de base précité).

Tous les liants hydrauliques classiques vendus dans le commerce, en particulier les différents types de ciments (y compris le ciment naturel du type pouzzolane) peuvent être utilisés.

La poudre de béton cellulaire est un sous-produit de la fabrication des blocs ou parpaings qui se réalise par coulée de plaques de béton dans lesquelles ont été incorporés des réactifs créant des pores au sein de la masse.
Ces plaques sont ensuite débitées en bloc par sciage en produisant une grande quantité de poudre, pour laquelle il n'existe actuellement que peu de débouchés industriels.

On préfère des poudres présentant une granulométrie comprise entre 0 et 3.

Leur utilisation dans les compositions de l'invention permet donc d'une part de valoriser cette matière et, par suite de leurs propriétés intrinsèques de légèreté contribue aux propriétés isolantes recherchées.

Il n'est pas exclu cependant, selon l'invention, qu'une partie de la poudre de béton cellulaire soit remplacée par une teneur, même relativement importante de sable mais ceci au détriment des propriétés recherchées.
Les billes de matières expansées sont des matières d'origine synthétique (en particulier le polystyrène) ou d'origine naturelle (argile) qui ont été « gonflées » soit à l'aide de gaz ou par un traitement thermique approprié.

Ces produits sont bien connus et ne nécessitent pas de description supplémentaire.

Les granulats de liège sont aussi des produits existants dans le commerce, d'origine naturelle et sont bien connus.

Les adjuvants de renforcement et d'ouvrabilité du type de la méthylhydroxyethyl-cellulose sont des produits de synthèse du commerce.

Il peut être recommandable pour accroître la stabilité dimensionnelle d'incorporer dans le mélange précité, des fibres synthétiques telles que celles habituellement préconisées dans le béton et qui généralement sont livrées dans le commerce sous forme de filaments coupés de 12 ou de 18 mm de longueur.

Afin d'illustrer l'invention, celle-ci sera décrite dans les exemples qui suivent donnés à titre d'exemples, sans caractère limitatif.

Dans tous les exemples, les proportions indiquées sont des proportions volumétriques.

### Exemples

Les compositions 1 à 3 reprises dans les tableaux qui suivent s'adressent plus spécifiquement à la réalisation de compositions destinées à la réalisation de chapes de recouvrement et de chapes de finition pour des planchers ne nécessitant pas une importante isolation phonique (planchers entre les caves et le rez-de-chaussée par exemple).

Les compositions 4 à 6 sont plus spécifiquement destinées à des utilisations pour des chapes de plancher combinant une isolation phonique avec une isolation thermique.

Les compositions des revendications 7 à 9 concernent des compositions pour des chapes de finition pour des planchers qui peuvent être, par exemple, superposés aux chapes décrites dans les compositions 1 à 6.

Les compositions 6 à 12 concernent des dalles préfabriquées pour le recouvrement de planchers.

Les compositions 13 et 14 peuvent convenir notamment pour la réalisation de cloisons non porteuses dans le bâtiment.

La mise en oeuvre des compositions s'effectue par gâchage avec de l'eau en fonction des utilisations envisagées.

En particulier, pour la réalisation de chapes coulées, les spécialistes en fonction des nécessités et des conditions de travail détermineront aisément la quantité d'eau de gâchage suffisante pour la pose par coulée de la chape.

Pour ce qui concerne les compositions 10 à 14, une teneur plus faible en eau de gâchage sera également aisément déterminée par les spécialistes en fonction des conditions de mise en oeuvre.

Il convient de noter que l'adjonction d'autres constituants aux compositions précitées relève de l'invention. Il peut s'agir d'adjuvants connus permettant de réaliser une surface de bonne planéité, de préférence à effet auto-lissant.

En principe, la mise en oeuvre des compositions selon l'invention ne diffère pas de ce qui est généralement prescrit dans la construction pour ces différents types de produits.

Bien qu'on ait décrit des formes d'exécution particulièrement préférées de l'invention, l'invention n'est pas limitée par les exemples illustratifs indiqués, pour autant qu'elle relève du cadre de l'invention tel que défini par les revendications qui suivent.

**Tableau I. (Chape)**

| Constituant (En litres) | Composition 1 | Composition 2 | Composition 3 |
|---|---|---|---|
| Ciment | 30 | 30 | 30 |
| Poudre béton cellulaire | 40 | 20 | 35 |
| Bille de polystyrène | 30 | 50 | 35 |
| Liège (granulat) | - | - | - |
| Méthylhydroxyethyl cellulose | - | - | - |
| Fibre synthétique | - | - | - |

**Tableau II. (Chape)**

| Constituant | Composition 4 | Composition 5 | Composition 6 |
|---|---|---|---|
| (En litres) | | | |
| Ciment | 30 | 30 | 30 |
| Poudre béton cellulaire | 30 | 25 | 10 |
| Bille de polystyrène | 35 | 33 | 50 |
| Liège (granulat) | 4.90 | 10 | 7 |
| Méthylhydroxyethyl | 0.10 | 0.30 | 0.50 |
| cellulose | | | |
| Fibre synthétique | - | 1.70 | 2.50 |

**Tableau III. (Dalle préfabriquée)**

| Constituant | Composition 7 | Composition 8 | Composition 9 |
|---|---|---|---|
| (En litres) | | | |
| Ciment | 30 | 30 | 40 |
| Poudre béton cellulaire | 35 | 15 | 27 |
| Bille de polystyrène | 25 | 35 | 12 |
| Liège (granulat) | 8 | 16 | 15 |
| Méthylhydroxyethyl cellulose | 0.50 | 0.50 | 1 |
| Fibre synthétique | 1.50 | 3.50 | 5 |

**Tableau IV. (Chape de finition)**

| Constituant | Composition 10 | Composition 11 | Composition 12 |
|---|---|---|---|
| (En litres) | | | |
| Ciment | 40 | 40 | 40 |
| Poudre béton cellulaire | 40 | 15 | 40 |
| Bille de polystyrène | 10 | 25 | 15 |
| Liège (granulat) | 5 | 15 | 45 |
| Fibre synthétique | 5 | 5 | 5 |

**Tableau V. (Cloison non porteuse)**

| Constituant | Composition 13 | Composition 14 | Composition |
|---|---|---|---|
| (En litres) | | | |
| Ciment | 40 | 40 | |
| Poudre béton cellulaire | 10 | 35 | |
| Bille de polystyrène | 30 | - | |
| Liège (granulat) | 12 | 15 | |
| Méthyl | - | 1 | |
| Fibre synthétique | 8 | 9 | |

## Revendications

1. Composition pour la production d'éléments de construction utilisables dans l'industrie du bâtiment présentant des propriétés d'isolation thermique et/ou phonique caractérisée en ce qu'elle est constituée essentiellement d'un liant hydraulique tel que du ciment et de poudre de béton cellulaire et de matière isolante, pouvant être mise en oeuvre par gâchage avec de l'eau.

2. Composition selon la revendication 1, caractérisée en ce qu'elle comporte, en volume, les constituants suivants :
- ciment : 20 à 50%, de préférence 30 à 40% ;
- poudre de béton cellulaire : 5 à 60%, de préférence 10 à 40% ;
- bille de matière expansée ou granulat de liège : solde pour 100 %.

3. Composition selon la revendication 1 ou 2, caractérisée en ce qu'on utilise ensemble des billes de matière expansée et des granulats de liège, et ceci dans un rapport volumétrique compris entre 10 à 90 pour les billes de matière expansée et entre 9 à 10 pour les granulats de liège.

4. Composition selon l'une quelconque des revendications précédentes, caractérisée en ce qu'on incorpore aux mélanges de base (pour 100 parties en volume) des adjuvants de renforcement d'ouvrabilité du type méthylhydroxyethylcellulose à raison de 0,01 à 5 volumes, de préférence de 0,1 à 1 volume.

5. Composition selon l'une quelconque des revendications précédentes, caractérisée en ce qu'on ajoute aux mélanges de base des fibres synthétiques à raison de 1 à 10 volumes et de préférence de 1,5 à 5 volumes (pour 100 volumes du mélange de base)

6. Composition selon l'une quelconque des revendications précédentes, caractérisée en ce que le liant hydraulique est un liant classique du commerce.

7. Composition selon l'une quelconque des revendications précédentes, caractérisée en ce que la poudre de béton cellulaire est un sous-produit résultant du sciage en blocs de plaques de béton dans lesquelles ont été incorporés des réactifs créant des pores au sein de la masse.

8. Composition selon l'une quelconque des revendications précédentes, caractérisée en ce que la matière isolante est constituée, en tout ou en partie, de billes de matières expansées de matières d'origine synthétique (en particulier le polystyrène) ou d'origine naturelle (argile).

9. Composition selon l'une quelconque des revendications précédentes caractérisée en ce que la matière isolante est constituée en tout ou en partie de granulats de liège.

10. Utilisation des compositions selon l'une quelconque des revendications précédentes sous forme gâchée avec de l'eau pour la réalisation de chapes ou de cloisons.
